# EUROPEAN PATENT APPLICATION

(11) **EP 0 605 093 A1**
(43) Date of publication of application: **06.07.1994**
(21) Application number: 93308695.1
(22) Date of filing: 01.11.1993
(51) Int. Cl.: H04Q 1/06

(54) **An improved cable organiser**

(30) Priority: 31.10.1992 GB 9222844
(71) Applicant: BICC Public Limited Company, London W1X 5FH (GB)
(72) Inventor: Jupp, Simeon, Bath, Avon BA1 6BA (GB); Gray, Philip John, Royston, Hertfordshire SG8 5DE (GB); Davey, Rodney John, Prescot, Merseyside L35 0QD (GB)
(74) Representative: Dlugosz, Anthony Charles

(57) **Abstract**

A cable organiser for installation on a cabinet comprises a substantially rigid elongate member (1) which is intended to be mounted horizontally on the cabinet and has a surface (4) against which cables from the cabinet are intended to be held. The organiser includes a number of cable retaining devices (12) that are supported on the elongate member between a closed position in which they will retain cables against the surface (4) and an open position which allows cables to be added or removed. Rotatable fingers (26) are provided at the ends of the elongate member for retaining cables extending vertically along the sides of the cabinet.

## Description

This invention relates to a cable organiser for guiding a plurality of electric and/or optical cables to or from electrical and/or optical equipment housed in a cabinet, casing or other enclosure.

The cable organiser is especially intended for use with equipment racks such as so-called "19 inch racks" or the like which are often used for optical and electrical telecommunications. In such equipment, for example where it is used as a patch assembly, a large number of optical or electrical cables may extend out from the front of the rack, vertically along the sides of the rack, or horizontally in front of the rack.

It is an object of the present invention to provide an improved cable organiser which is simple and inexpensive, which can be readily secured to the framework of a cabinet or other enclosure and into or from which a cable or cables can be readily introduced or withdrawn.

According to one aspect, the present invention provides a cable organiser for installation on a cabinet which comprises a substantially rigid elongate member 1 having means 11 for attachment to the cabinet and a surface 4 against which cables from the cabinet are intended to be held, and a pluraliry of devices 12 for retaining cables against the surface of the elongate member, the devices 12 being bent in shape and spaced along the elongate member 1, each device being capable of being moved between an open position which allows cables to be positioned against, or removal from, the surface, and a closed position in which the device retains the cables against the surface.

Preferably the devices are each pivotally supported on the elongate member and can be rotated between the open and the closed positions in order to add or remove cables. It is especially desirable to be able to lock the devices in their closed position against accidental movement, and in the case of devices that are pivotal, it is advantageous if the devices can be pulled away from the elongate member to a limited extent to a position in which they can be rotated between the open and closed position and, when in their closed position, can be pushed toward the elongate member to a limited extent, to a position in which they are locked in their closed position.

According to a preferred aspect of the invention, the improved cable organiser comprises a substantially rigid elongate member having at least one substantially planar support surface and, mutually spaced along the length of and adapted to retain a plurality of cables against said elongate support surface, a plurality of discrete devices each of substantially L-shaped transverse cross-section, one limb of each retaining device being so adjustably attached to said rigid elongate member along one side edge of the member that said limb protrudes from the member in a direction substantially normal to said support surface with the other limb of the device spaced from said support surface and that the device is constrained to move with respect to, and in said direction substantially normal to said support surface of, the member between open and closed positions, in the open position the device being capable of limited pivotal movement about an axis substantially parallel to the rigid elongate member and in the closed position said other limb of the device being closer to said support surface than in the open position and the device being locked against such pivotal movement.

In use, when it is desired to introduce a plurality of cables into or to withdraw a plurality of cables from the improved cable organiser, each of at least some of the retaining devices is moved with respect to and outwardly from the rigid elongate member to the open position and is pivoted about said pivotal axis to permit introduction or withdrawal of the cables from the space between said support surface and said other limbs of the devices and, thereafter, each device is pivoted in the opposite direction to its original position and is moved with respect to and inwardly towards the rigid elongate member to the closed position.

The devices may be arranged as an array of pairs of devices along the elongate member, for example with each device of a pair being secured to opposite side edges of the elongate members, the devices in each pair being oppositely oriented, so as to enclose cables between them when in their closed position. Preferably, also, to further facilitate such guiding of a cable or cables from or into the cable organiser at a position intermediate of its ends, the limb of each device which is spaced from the support surface when the device is in the closed position preferably is so disposed with respect to the rigid elongate member that its longitudinal axis lies in a plane inclined at an acute angle to the longitudinal axis of the member, the longitudinal axes of said limbs of the devices being substantially parallel to one another.

The improved cable organiser preferably also includes, in the region of one or each end of the rigid elongate member, at least one finger for retaining cables that extend vertically along the side of the cabinet. The fingers may be rotatable between open and enclosed positions in order to allow removal of, or retention of the cables. The fingers may be spring-loaded and pivotally mounted about an axis substantially normal to the longitudinal axis of the rigid elongate member and which can be used to retain a plurality of cables against a planar support surface of an adjacent substantially rigid elongate member which extends substantially normal to the elongate member of the improved cable organiser. The or each spring-loaded finger may protrude substantially radially from a stub which is rotatably mounted on the elongate member of the improved cable organiser about said pivotal axis and which is urged by associated spring means to rotate to any one of a plurality of positions determined by an associated ratchet and pawl mechanism.

The substantially rigid elongate member of the improved cable organiser preferably is of substantially channel-shaped transverse cross-section with the outer surface of the base of the channel constituting the planar support surface of the member. In this case, the channel of the elongate member may also be employed to convey a plurality of electrical and/or optical cables from or to electrical and/or optical equipment housed in a cabinet or other enclosure. If desired, separately formed elongate flaps may be detachably secured to the side walls of the channel-shaped elongate member and, over a marginal part of their widths nearer their free longitudinal edges, may be inclined inwardly towards the central plane of the elongate member to assist in retaining a plurality of cables in the channel.

The rigid elongate member of the improved cable organiser may have, at or near each of its ends, integral means for effecting a snap-fit in the frame of a cabinet or other enclosure.

The rigid elongate member of the improved cable organiser and the retaining devices may be made of metal or metal alloy having a covering layer of electrically insulating material but, preferably, for reasons of cost and weight, preferably the elongate member and the retaining devices are made of rigid plastics material.

The invention is further illustrated, by way of example, by the accompanying drawings, in which:
Figure 1 is a perspective view of an assembled organiser bar according to the invention;
Figure 2 is an exploded perspective view of the organiser bar shown in figure 1;
Figures 3 and 4 are perspective views, drawn on a larger scale, of a retaining device of the organiser shown in figure 1; and
Figures 5 and 6 are perspective views, drawn on a larger scale, of a spring-loaded finger of the organiser shown in figure 1.

Referring to the accompanying drawings, an organiser according to the invention comprises an elongate rigid plastics member 1 which is formed in three parts: a front part 2 of generally "U" shaped transverse cross-section and having a front surface against which cables from a 19 inch rack are intended to be retained; an upper side part 6 and a lower side part 8, the upper and lower side parts having substantially the same configuration. The front part 2 and upper and lower side parts 6 and 8 are located together and secured by means of screws 10 and form the member 1 which has an internal channel extending along its length between the upper and the lower side parts 6 and 8. At each end of the front part 2 a pair of catches 11 are provided in order to retain the elongate member 1 horizontally on a rack.

Along the length of the elongate member 1 an array of ten cable retaining devices 12 is arranged so that five devices are supported along the upper edge of the front part 2 and five further devices are supported along the lower edge. The devices are arranged in pairs, one device supported at the upper edge and one supported at the lower edge forming each pair of devices. Each device has a generally "L" shaped transverse section having two limbs 14 and 16, and at the end of one limb 14 the device is provided with a pair of pins 18 for pivotally supporting the device in a recess 20 in the front part 2 of the elongate member 1, and stops 22 and 24 for limiting the extent to which the device may be rotated to 90° of arc.

In addition, a pair of fingers 26 are vertically mounted at each end of the elongate member 1 by means of pins 28 that extend through apertures 30 in the elongate member. Each finger 26 has a stub portion 29 one end surface 32 of which has a profile that matches a profiled surface that surrounds the apertures 30 in the elongate member, and the fingers are movable vertically along the pins 28 to a limited extent but are biased towards the profile surface of the elongate member by springs 34. The fingers 26 are thus able to be rotated and will remain in any of a number of positions that are determined by the profiled surfaces.

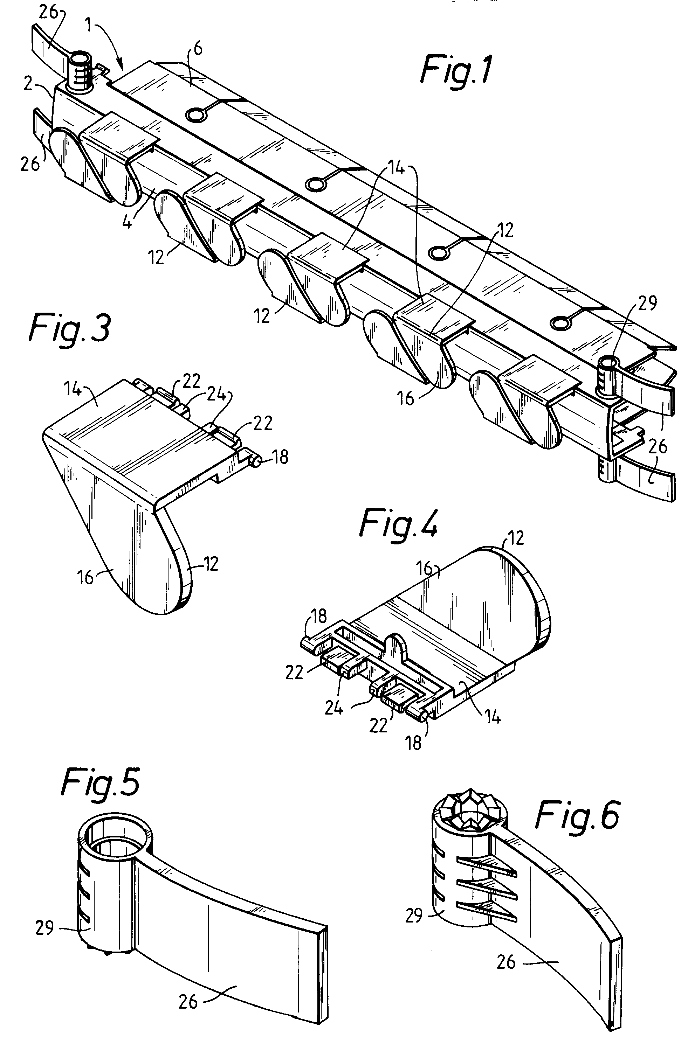

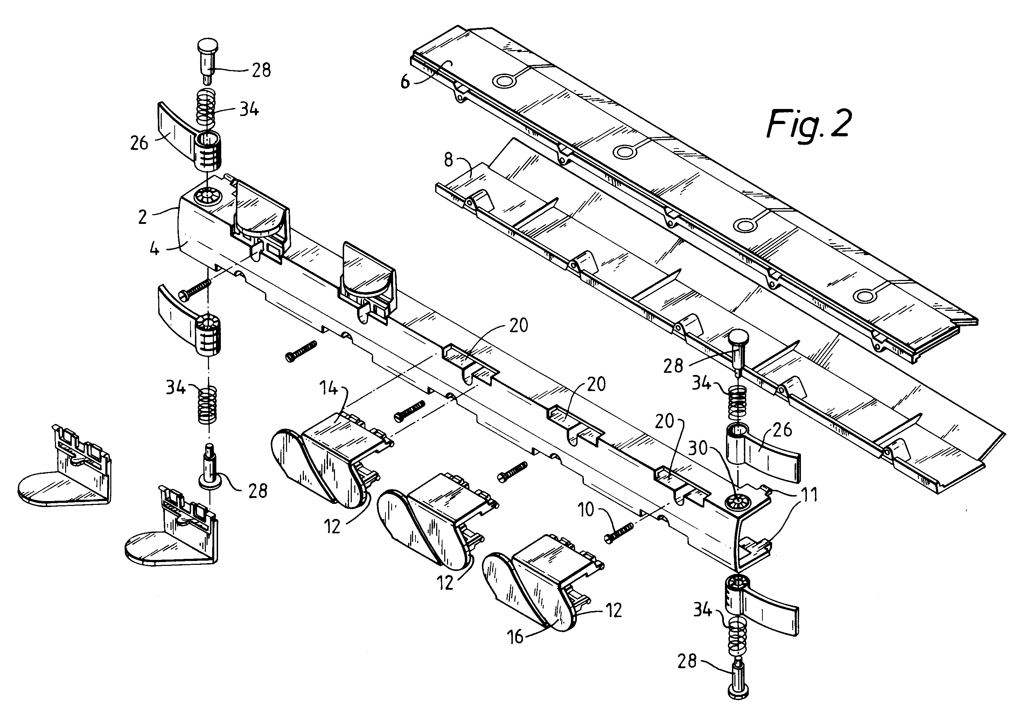

When the elongate member has been secured to an equipment rack, cables extending from the front of the rack may be laid along part or all of the front surface 4 of the elongate member by moving one or more retaining devices from their closes position (as shown in figure 1) to their open position (as shown by the two leftmost devices located on the upper surface of the organiser shown in figure 2). This involves pulling the device in a direction away from the front surface 4 of the elongate member 1 to a limited extent until the device is supported by its pins 18 located in the ends of the recess 20, and then rotating the device until the limb 14 is vertical. Afterwards the device is rotated until the limb 14 is horizontal and pushed toward the front surface 4 so that the device slides into the recess 20 to a limited extent and is locked in its closed position.

Cables extending vertically at the side of the rack can be held in place when the fingers 26 are in the closed position as shown in figure 1, and can be removed by rotating the fingers by 90° so that they extend substantially perpendicularly to the elongate member 1. Cables that extend between racks that are located on either side of the rack on which the organiser is installed may be routed in the channel in the elongate member formed between the upper and lower parts 6 and 8.

## Claims

1. A cable organiser for installation on a cabinet, which comprises a substantially rigid elongate member (1) having means 11 for attachment to the cabinet and a surface (4) against which cables from the cabinet are intended to be held, and a plurality of devices (12) for retaining cables against the surface of the elongate member, the devices (12) being bent in shape and spaced along the elongate member (1), each device being capable of being moved between an open position which allows cables to be positioned against, or removed from, the surface and a closed position in which the device retains the cables against the surface.

2. An organiser as claimed in claim 1, wherein the devices (12) are each pivotally supported on the elongate member and can be rotated between the open and the closed positions.

3. An organiser as claimed in claim 1 or claim 2, wherein the devices (12) can be locked in their closed position against accidental movement.

4. An organiser as claimed in claim 2, wherein the devices (12) can be pulled away from the elongate member (1) to a limited extent to a position in which they can be rotated between the open and closed position and, when in their closed position, can be pushed toward the elongate member to a limited extent, to a position in which they are locked in their closed position against accidental movement.

5. An organiser as claimed in any one of claims 1 to 4, wherein each device is substantially "L" shaped in transverse cross-section.

6. An organiser as claimed in any one of claims 1 to 5, wherein the devices (12) are arranged as an array of pairs of devices along the elongate member, the devices in each pair being oppositely oriented so as to enclose cables between them when in their closed position.

7. An organiser as claimed in any one of claims 1 to 6, wherein the elongate member (12) has a substantially channel shaped transverse cross-section and allows additional cables to extend within its channel.

8. An organiser as claimed in any one of claims 1 to 7, which includes at least one finger (26) located in the region of an end of the elongate member (1) for retaining cables that extend vertically along the side of the cabinet.

9. An organiser as claimed in claim 8, wherein the or each finger (26) can be rotated between a closed position in which cables are held along the side of the cabinet, and an open position in which cables can be positioned against the side of the cabinet or removed therefrom.

10. A cable organiser which comprises a substantially rigid elongate member having at least one substantially planar support surface and, mutually spaced along the length of and adapted to retain a plurality of cables against said elongate support surface, a plurality of discrete devices each of substantially L-shaped transverse cross-section, one limb of each retaining device being so adjustably attached to said rigid elongate member along one side edge of the member that said limb protrudes from the member in a direction substantially normal to said support surface with the other limb of the device spaced from said support surface and that the device is constrained to move with respect to, and in said direction substantially normal to said support surface of, the member between open and closed positions, in the open position the device being capable of limited pivotal movement about an axis substantially parallel to the rigid elongate member and in the closed position said other limb of the device being closer to said support surface than in the open position and the device being locked against such pivotal movement.
